# EUROPÄISCHE PATENTANMELDUNG

(11) **EP 0 638 234 A1**
(43) Veröffentlichungstag der Anmeldung: **15.02.1995**
(21) Anmeldenummer: 94112513.0
(22) Anmeldetag: 10.08.1994
(51) Int. Cl.: A01M 23/18

(54) **Lebendfangfalle für Raubtiere**

(30) Priorität: 11.08.1993 DE 4326871; 15.12.1993 DE 9319266 U; 10.12.1993 DE 9318990 U
(71) Anmelder: Claas, Günther, D-49163 Bohmte (DE)
(72) Erfinder: Feimann, Johannes, D-49163 Bohmte (DE)

(57) **Zusammenfassung**

Die vorliegende Erfindung beschreibt eine Lebendfalle für Raubtiere, die so ausgebildet ist, daß sie nach dem Einführen in einen Durchlaß fängig gestellt werden kann. Außerdem soll die Baulänge wesentlich gegenüber bekannten Ausführungsformen reduziert werden, damit der Durchlaß nur über eine kurze Strecke gereinigt werden muß. Zu diesem Zweck ist die Lebendfalle mit einem Halbkegel (2) ausgerüstet, der an dem der Öffnung des Durchlasses zugewandten Ende des Fallenkörpers (1) schwenkbar gelagert ist. Das Auslösegestänge (3) ist mit einem Nocken (14) versehen, der in der fängigen Stellung von einer Nase hintergriffen ist. Sobald das Auslösegestänge (3) verdreht wird, fällt der Halbkegel (2) in die Schließstellung. Durch den heruntergefallenen Sperrbolzen ist der Halbkegel (2) gegen Verschwenken gesichert. Das Halteelement für das Verschlußelement muß nicht unbedingt ein Nocken sein. Vielmehr kann anstatt des Nockens auch ein das Verschlußelement in der Offenstellung berührender Dauermagnet verwendet werden.

## Beschreibung

Die vorliegende Erfindung betrifft eine Lebendfalle für Raubtiere, wie Füchse, Marder, wildernde Katzen oder dergleichen, die in einen Durchlaß einführbar ist, die mit wenigstens einem schwenkbaren Verschlußelement versehen ist, welches mittels eines in den Durchlaß hineinragenden Auslösegestänges selbsttätig von der Offen- in die Schließstellung schwenkbar ist.

Die Lebendfalle wird benutzt, um in freier Wildbahn lebende Raubtiere in tierschutzgerechter Art zu fangen. Die Durchlässe sind im Revier vorhanden, beispielsweise, wenn ein Graben oder ein Bach einen Weg kreuzt. Sie können jedoch auch speziell für das Fangen der Raubtiere angelegt sein. Die Fangquote ist besonders hoch, wenn die Fallen in Durchlässe aufgestellt werden, da Raubtiere solche Wege bevorzugen. Üblicherweise ist solch ein Durchlaß aus mehreren aneinander gereihten Betonrohren gebildet.

Bei einer aus dem DE 9007216 U1 bekannten Lebendfalle besteht das Verschlußelement je nach Ausführung aus wenigstens einer ebenen, schwenkbaren Klappe. Die stirnseitige Begrenzung wird durch zwei Deckel gebildet, die mit einer Öffnung versehen sind, durch die die Tiere hindurchschlüpfen. Zur Bildung des Fallenkörpers sind die stirnseitigen Deckel durch Längsstreben miteinander verbunden. Die Außenkontur des Fallenkörpers entspricht der Innenkontur des Durchlasses, so daß er schließend darin eingeführt ist. Zur Begrenzung des Fangraumes wird bei der vorbekannten Ausführung der Durchlaß benutzt.

Nachteilig ist bei dieser Ausführung, daß der Abstand der beiden Deckel größer sein muß, als die Länge des Tieres, damit dieses beim Schließen der Klappen nicht verletzt wird. Die Länge dieser Lebendfalle liegt bei ca. 1 m. Diese länge bedingt, daß der Durchlaß auf dieser Länge vor dem Einführen der Lebendfalle gereinigt werden muß. Dieser von Hand durchzuführende Reinigungsvorgang ist äußerst mühsam. Darüberhinaus ist es nachteilig, daß das Auslösegestänge so ausgelegt ist, daß die Lebendfalle vor dem Einführen in den Durchlaß fängig zu stellen ist, d.h., die Klappen müssen in die Offenstellung gebracht werden. Beim Einführen in den Durchlaß passiert es deshalb häufig, daß durch ungewollte Betätigung des Auslösegestänges die Klappen schließen. Darüberhinaus ist es nachteilig, daß der Fangraum so klein ist, daß sich das Tier kaum noch bewegen kann. Da es dann versucht, zu entkommen, wird auf die Klappen eine relativ große Kraft aufgebracht, so daß es geschehen kann, daß die Lebendfalle aus dem Durchlaß herausgedrückt wird. Ferner ist die Lebendfalle von außen sichtbar.

Der vorliegenden Erfindung liegt daher die Aufgabe zugrunde, eine Lebendfalle der eingangs näher bezeichneten Art so auszubilden, daß die Länge gegenüber der vorbekannten Konstruktion wesentlich geringer ist, daß der Fangraum wesentlich größer wird und daß die Lebendfalle fängig gestellt wird, nachdem sie in den Durchlaß eingeführt wurde.

Diese Aufgabe wird dadurch gelöst, daß das Verschlußelement nach Art eines Halbkegels ausgebildet ist, der an der der Spitze gegenüberliegenden, der Öffnung des Durchlasses zugewandten Seite im Bereich der die Mantelfläche begrenzenden Längskanten schwenkbar gelagert ist.

Das Verschlußelement als Halbkegel ist so zu sehen, als wenn ein Kegel in seiner Längsmittelebene in zwei gleiche Teile zerteilt wird. In der fängigen Stellung steht dieser Halbkegel so, daß seine Spitze im oberen Bereich des Durchlasses liegt. Da die Schwenkachse nach unten versetzt ist, fällt der Halbkegel durch sein Eigengewicht nach unten, sobald durch das vom eingedrungenen Raubtier betätigte Auslösegestänge die Arretierung auflöst. Die Baulänge dieser Lebendfalle ist äußerst gering, da sie sinngemäß einen Endverschluß des Durchlasses bildet. Das gegenüberliegende Ende des Durchlasses wird durch ein geeignetes Absperrelement verschlossen, so daß fast die gesamte Länge des Durchlasses als Fangraum zur Verfügung steht, so daß das gefangene Raubtier Bewegungsfreiheit erhält. Durch die Schrägflächen des Halbkegels in seiner Schließlage werden die von dem Raubtier aufgebrachten Kräfte in radiale und axiale Komponenten zerlegt, so daß es unmöglich ist, daß die Lebendfalle aus dem Durchlaß herausgedrückt wird.

Weiterhin ist es vorteilhaft, daß durch die relativ kurze Länge der Durchlaß nur über einen entsprechenden Bereich gereinigt werden muß. Nach dem Einsetzen ist es möglich, den Halbkegel mit einem Arm in die Offenstellung zu drücken, wodurch das Einsetzen wesentlich einfacher wird. Außerdem kann die Lebendfalle so weit in den Durchlaß hineingeschoben werden, daß sie unsichtbar wird. Stellt der Jäger fest, daß der Halbkegel heruntergefallen ist, kann an der gegenüberliegenden Seite des Durchlasses ein Fangkorb aufgestellt und das Sperrelement entfernt werden.

Damit beim Betätigen des Auslösegestänges durch das Raubtier in konstruktiv einfacher Weise der Halbkegel in die Schließstellung fällt, ist vorgesehen, daß er an definierter Stelle im Bereich des Krümmungsmittelpunktes eine U-förmige Durchbrechung aufweist, derart, daß an der der Spitze abgewandten Seite eine Zunge gebildet wird, die sich in der fängigen Stellung der Lebendfalle an einem dem Auslösegestänge angeordneten Nocken abstützt. Wird dieser Nocken verdreht, wird durch die beidseitigen Freiräume in Verbindung mit der Schrägung die Freigabe bewirkt, so daß der Halbkegel sofort herunterfällt. Eine konstruktiv einfache Lösung ergibt sich, wenn das Auslösegestänge aus einer den Nocken tragenden, horizontalen Stange, die am Fallenkörper drehbar, jedoch gegen axiale Verschiebung gesichert ist, gelagert ist und aus einem im Winkel dazu stehenden Auslösehebel gebildet ist, der im Abstand zum Fallenkörper steht. Da die horizontale Stange in der vertikalen Mittelebene des Fallenkörpers im oberen Bereich liegt, stellt er sich beim Einsetzen der Lebendfalle in den Durchlaß von selbst so ein, daß der Nocken lagegerecht zur Durchbrechung steht. Der Jäger braucht deshalb den Halbkegel nur hochzuschwenken. Sobald das Tier an den in den Durchlaß von oben hineinragenden Auslösehebel anstößt, wird der Auslösehebel ausgelenkt und die Stange verdreht, so daß der Halbkegel herunterfällt. Dadurch ist auch eine hohe Sicherheit gegeben, daß das Raubtier nicht entweichen kann.

Damit der Halbkegel durch das eingefangene Raubtier nicht nach oben gedrückt werden kann, ist in weiterer Ausgestaltung vorgesehen, daß an der der Spitze gegenüberliegenden Seite im oberen Bereich des Fallenkörpers ein in vertikaler Richtung verfahrbarer Sperrbolzen in einer Hülse derart gelagert ist, daß dieser in der Schließstellung des Halbkegels den Rand hintergreift.

In der Offenstellung des Halbkegels liegt der Sperrbolzen auf der Außenfläche des Halbkegels auf. Kurz bevor oder nachdem der Halbkegel die Schließstellung erreicht hat, fällt der Sperrbolzen selbsttätig herunter und blockiert den Halbkegel.

Dabei ist es dann zweckmäßig, wenn der Halbkegel an der der Spitze gegenüberliegenden Seite mit einem abgewinkelten Kragen versehen ist. In der Schließstellung des Halbkegels steht dieser Kragen dann waagerecht. Dadurch ist der Hub des Sperrbolzens relativ gering.

Der Fallenkörper läßt sich in materialsparender Weise herstellen, wenn er aus zwei im Abstand zueinander stehenden Endbögen und mindestens drei die Endbögen verbindenden Längsstegen besteht, wobei ein oberer Längssteg die Krümmungsmittelpunkte verbindet. Die Endbögen sind der Innenkontur des Durchlasses angepaßt. Durch diese Ausführung bleibt auch das Gewicht der Lebendfalle verhältnismäßig gering. Der obere Längssteg kann dann auch zur Lagerung des Auslösegestänges verwendet werden.

Bei einer derartigen Lebendfalle für Raubtiere ist als Halteelement für das Verschlußelement in der Offenstellung ein Nocken vorgesehen, an dem sich eine Zunge des Hauptkegels in Offenstellung abstützt. Als Alternative hierzu kann auf die mechanischen Halteelemente verzichtet werden, dies wird nach einem weiteren wesentlichen Merkmal der Erfindung dadurch erreicht, daß das Halteelement ein das Verschlußelement in der Offenstellung berührender Dauermagnet ist.

Da nunmehr als Halteelement ein Dauermagnet verwendet wird, entfallen die mechanischen Halteelemente, die beispielsweise bei winterlichen Temperaturen festfrieren könnten. Ferner entfallen bei der Herstellung die zusammenwirkenden Nocken und Durchbrüche, so daß die Fertigung vereinfacht wird. Der Dauermagnet kann als handelsübliches Teil preiswert bezogen werden, so daß die Lösung auch noch kostengünstig ist. Außerdem ist das Fängig-Stellen der Lebendfalle sehr einfach, da dazu lediglich das Verschlußelement in die Offenstellung zu schwenken ist. Die Magnetkraft ist auf das Eigengewicht des Verschlußelementes ausgelegt, so daß selbst bei einer leichten Bewegung des Auslösegestänges das Veschlußelement herunterfällt. Normalerweise wird von dem Raubtier das Auslösegestänge verdreht. Da bei jeder Form des Verschlußelementes dieses im Bereich der Halteelemente bogenförmig ausgebildet ist, kommt der Haltemagnet auch bei einem kleinen Drehwinkel außer Kontakt mit dem Verschlußelement. Ein günstiges Kräfteverhältnis ergibt sich, wenn der Dauermagnet so an dem Auslösegestänge festgelegt ist, daß er das Verschlußelement an dem der Schwenkachse gegenüberliegenden Bereich berührt.

Da es in der Praxis geschehen kann, daß das Raubtier das Auslösegestänge geradlinig verschiebt, ist vorgesehen, daß das Verschlußelement mit mindestens einer Durchbrechung mit gegenüber dem Dauermagneten größerer Außenkontur versehen ist, die in Längsrichtung der Lebendfalle gesehen, neben dem Dauermagneten liegt. Zweckmäßigerweise sind in dem Verschlußelement zwei Durchbrechungen vorgesehen, von denen jeweils eine vor und hinter dem Dauermagneten liegt. Wird durch das Raubtier das Auslösegestänge vor- oder zurückbewegt, fällt das Verschlußelement in die Schließstellung, sobald der Dauermagnet in den Bereich der jeweiligen Durchbrechung kommt. Da bei dieser Ausführung bei Fängig-Stellen der Lebendfalle sicher gestellt sein muß, daß der Dauermagnet nicht in einer der Durchbrechungen steht, ist vorgesehen, daß das Auslösegestänge durch wenigstens eine Positionierfeder derart ausgerichtet ist, daß in der Offenstellung des Verschlußelementes der Dauermagnet neben oder zwischen der Durchbrechung bzw. den Durchbrechungen steht. Zur Sicherung der Schließlage des Verschlußelementes ist der Fallerkörper an dem der Schwenkachse des Verschlußelementes zugeordneten Seite mit einer schwenkbaren, den Rand des Verschlußelementes in der Schließlage hintergreifenden Sicherungsklinke ausgerüstet.

Wie bekannt werden derartige Lebendfallen in Durchlässe aufgestellt. Üblicherweise ist solch ein Durchlaß aus mehreren aneinandergereihten Betonrohren gebildet. Ein Ende eines solchen Durchlasses wird dabei durch die Lebendfalle selbst abgesperrt, während im Bereich des anderen Endes ein Sperrelement festgesetzt wird. Zum Anlocken der Raubtiere wird in den Durchlaß ein Köder in Form von Futter oder einem Duftstoff gelegt. Nachdem die Lebendfangeinrichtung in den Durchlaß eingesetzt ist, ist eine problemlose Kontrolle für den Jäger jedoch nicht mehr möglich. Um eine einfache Kontrolle des Köderbestandes zu ermöglichen, wird nach einem wesentlichen Merkmal der Erfindung vorgeschlagen, daß Sperrelement topfartig auszubilden, wobei zumindest die der Lebendfalle zugewandte Innenwandung des Sperrelementes mit einer Vielzahl von Durchbrechungen versehen ist.

Der eingelegte Köder wird nunmehr sinngemäß in einen Käfig gelegt, so daß das Raubtier diesen zwar wahrnimmt, jedoch nicht an ihn herangelangt. Die Wahrnehmung ist durch die Vielzahl der Durchbrechungen sichergestellt. Der Köder kann nunmehr mehrmals verwendet werden bzw. problemlos aufgefüllt oder erneuert werden.
Die der Lebendfalle abgewandte Außenwandung des Sperrelementes ist zweckmäßigerweise plattenförmig ausgebildet und mit Verriegelungselementen ausgerüstet. Dadurch wird eine ausreichende Stabilität des Sperrelementes im Betriebszustand erreicht. Ferner ist der Köder vor Witterungseinflüssen und Schmutz geschützt. In dieser Außenwandung ist in weiterer Ausgestaltung eine Öffnung vorgesehen, die durch einen Deckel oder eine Klappe verschließbar ist, um den Köder bei geöffnetem Deckel oder Klappe einlegen oder kontrollieren zu können.
Es hat sich als besonders vorteilhaft erwiesen, die topfartige Köderbox mit Nestmaterial für Kleintiere, wie Mäuse auszufüllen. Durch eine Schlupföffnung im Bodenbereich der Innenwandung erhalten die Kleintiere Zugang zu dem Köderraum und dienen somit ungefährdet als Lebendköder.
Die Herstellung des Sperrelementes wird besonders einfach und kostengünstig, wenn sie aus einem Drahtgewebe oder einem Lochblech gefertigt ist.
Weitere vorteilhafte Ausgestaltungen ergeben sich aus den weiteren Unteransprüchen.

Im Folgenden soll die Erfindung anhand eines Ausführungsbeispieles und mehrerer dieses darstellender Figuren näher erläutert werden. Dabei zeigt
- Figur 1: die erfindungsgemäße Lebendfalle in einer perspektivischen Darstellung mit Blick auf die der Spitze des Halbkegels abgewandten Einlaufseite,
- Figur 2: eine der Figur 1 entsprechende Darstellung, jedoch mit Blick auf die Spitze des Halbkegels,
- Figur 3: die Lebendfälle nach den Figuren 1 und 2 in einer Seitenansicht mit dem aus Betonrohren gebildeten Durchlaß,
- Figur 4: eine der Figur 3 entsprechende Draufsicht, jedoch ohne den Durchlaß,
- Figur 5: die erfindungsgemäße Lebendfalle in abgewandelter Ausführungsform in Seitenansicht,
- Figur 6: eine der Figur 5 entsprechende Draufsicht,
- Figur 7: eine Stirnansicht der Lebendfalle der Figuren 5 und 6,
- Figur 8: die erfindungsgemäße Lebendfangeinrichtung in gegenüber der Lebendfangeinrichtung gemäß der Figuren 1 bis 7 in erweiterter Form im Vertikalschnitt,
- Figur 9: eine der Figur 8 entsprechende Teildraufsicht und
- Figur 10: eine Stirnansicht des Absperrelementes mit Blick auf die Innenwandung.

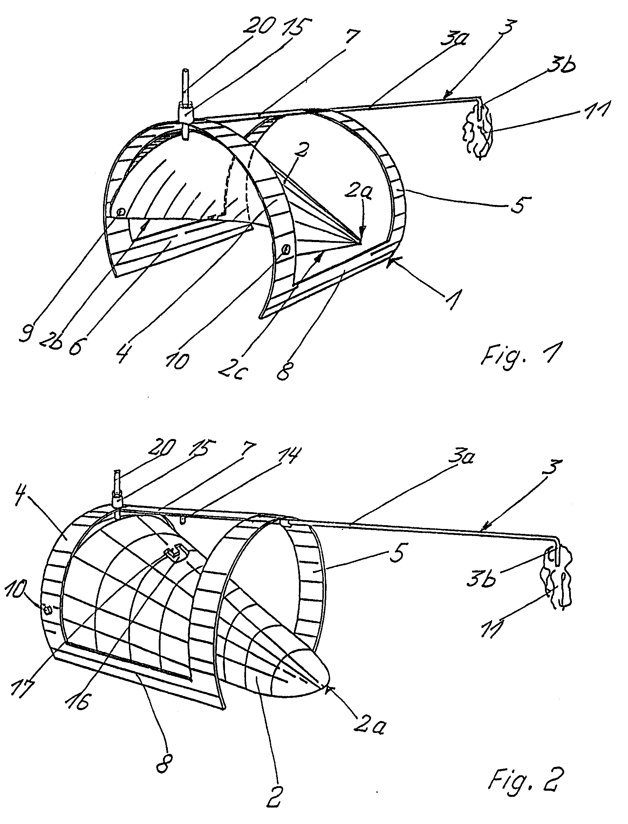

Die in den Figuren 1 - 4 als ein bevorzugtes Ausführungsbeispiel dargestellte Lebendfalle besteht im wesentlichen aus einem Fallenkörper 1, einem schwenkbar gelagerten Halbkegel 2 und einem im oberen Bereich des Fangkörpers 1 drehbargelagerten Auslösegestänge 3. Der Fallenkörper 1 besteht aus zwei im Abstand zueinander angeordneten, baugleichen Endbögen 4 und 5, die durch drei Längsstege 6,7 und 8 miteinander verbunden sind. Die Längsstege 6 und 8 bilden die untere Begrenzung des Fallenkörpers 1. Der mittlere Längssteg 7 liegt im oberen Bereich und verbindet die beiden Endbögen 4 und 5 im Bereich der Krümmungsmittelpunkte. Die Spitze 2a des Halbkegels ist abgerundet. Das gegenüberliegende Ende des Halbkegels ist im Bereich der den Halbkegel 2 begrenzenden Längskanten 2b, 2c, an dem Endbogen 4 des Fallenkörpers 2 schwenkbar gelagert. Dazu sind in den Endbogen 4 auf gleicher Höhe zwei Bolzen 9 und 10 eingesetzt, die in entsprechenden Bohrungen des Halbkegels 2 liegen. Die Spitze 2a des Halbkegels 2 steht gegenüber dem Endbogen 5 um einen, bezogen auf seine Gesamtlänge, geringen Betrag vor. Auf dem Halbkegel 2 ist an der Spitze 2a gegenüberliegenden Seite ein abgewinkelter Kragen 2d angeformt oder angesetzt.

Das Auslösegestänge 3 besteht aus einer horizontalen Stange 3a und einem Auslösehebel 3b, der im dargestellten Ausführungsbeispiel durch Abwinkeln des die Spitze 2a zugeordneten Endes gebildet ist. Aus den Figuren ergibt sich, daß der Abstand zwischen der Spitze 2a und dem Auslösehebel 3b sehr groß ist. Am Auslösehebel 3b ist ein Köder 11, beispielsweise eine Feder oder ein Zweig befestigt. Die horizontale Stange ist in zwei im Abstand zueinander stehenden Lagerhülsen 12 und 13 drehbar gelagert. Die Lagerhülse 12 ist an die untere Seite des oberen Längssteges 7, die Lagerhülse 13 lagegerecht am Endbogen 5 angesetzt. Das Auslösegestänge 3 ist durch einen dem Auslösehebel 3b gegenüberliegenden Nocken 14 gegen axiale Verschiebung gesichert, da dieser im Endbereich der horizontalen Stange 3b liegt.

Fluchtend zum oberen Längssteg 7 ist auf die Außenseite des Endbogens 4 eine Führungsbuchse 15 aufgesetzt. Der Endbogen 4 ist mit einer korrespondierenden Bohrung versehen. In dieser Führungsbuchse 15 ist ein in vertikaler Richtung bewegbarer Sperrbolzen 20 gelagert, der durch einen Bund gegen Herausfallen gesichert ist. Im Halbkegel 2 ist eine U-förmige Durchbrechung vorgesehen, die unterhalb des oberen Längssteges 7 liegt bzw. in der Linie, die durch die Krümmungspunkte des Halbkegels 2 definiert ist. Durch die U-förmige Durchbrechung wird eine Nase 17 mit beidseitigen Freiräumen gebildet.

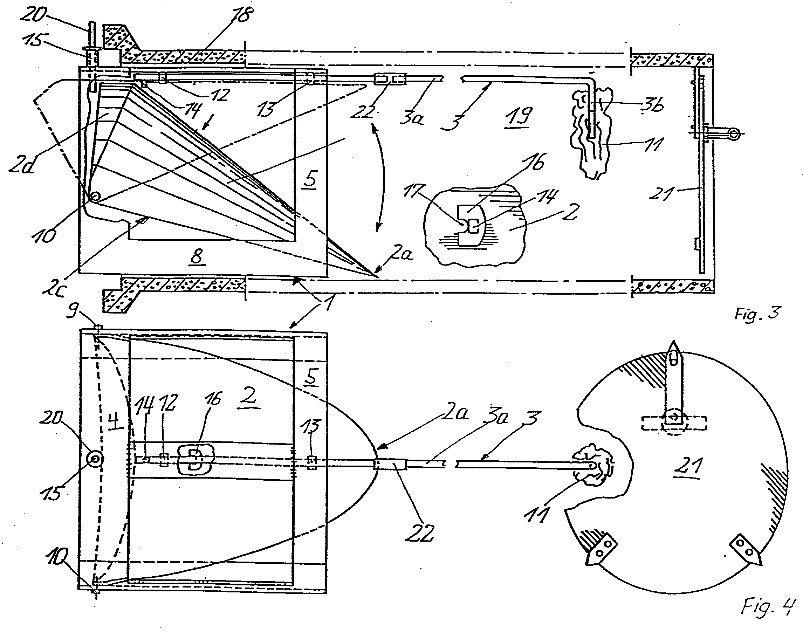

Wie die Figur 3 zeigt, wird die Lebendfalle in einen aus Rohren 18 gebildeten Durchlaß 19 eingeschoben. Der Halbkegel 2 befindet sich dann in der Schließstellung gemäß den Figuren 1 - 4. Der Sperrbolzen 20 hintergreift den abgewinkelten Kragen 2d. Die Lebendfalle kann dann soweit in den Durchlaß 19 hineingeschoben werden, daß der Endbogen 4 gegenüber der Öffnung des Durchlasses 19 nicht mehr vorsteht.

Um die Lebendfalle fängig zu machen, wird der Sperrbolzen 20 und der Halbkegel 2 angehoben. Das untere Ende des Sperrbolzen 20 steht dann auf der Außenfläche des Halbkegels auf. Ist die Lebendfalle nicht ganz in den Durchlaß 19 hineingeschoben, kann der Jäger allein schon an der Stellung des Sperrbolzen 20 erkennen, ob die Falle geschlossen ist oder nicht.

Hat der Halbkegel 12 die obere Endstellung erreicht, hintergreift die Nase 17 den Nocken 14, wodurch der Halbkegel in dieser Offen- bzw. Fangstellung gehalten wird. Diese Stellung ist in der Figur 3 in strich-punktierten Linien gezeichnet.
Aus den Figuren ergibt sich von selbst, daß der Halbkegel 2 in die Schließstellung zurückfällt, sobald der Auslösehebel 3b um einen relativ geringen Winkel durch ein eingeschlüpftes Raubtier verdreht wird.

Die gegenüberliegende Öffnung des Durchlasses 19 wird durch ein in den Figuren 3 und 4 dargestelltes plattenförmiges Sperrelement 21 verschlossen. Der Halbkegel 2 ist aus einem Blechzuschnitt geformt. Die horizontale Stange 3a des Auslösegestänges 3 besteht im dargestellten Ausführungsbeispiel aus zwei Stücken, die durch eine Kupplungshülse 22 miteinander verbunden sind. Dadurch kann beispielsweise bei Nichtgebrauch oder beim Transport die Stange 3b zerlegt werden, so daß sie gegenüber dem Fallenkörper 1 nicht störend vorsteht.

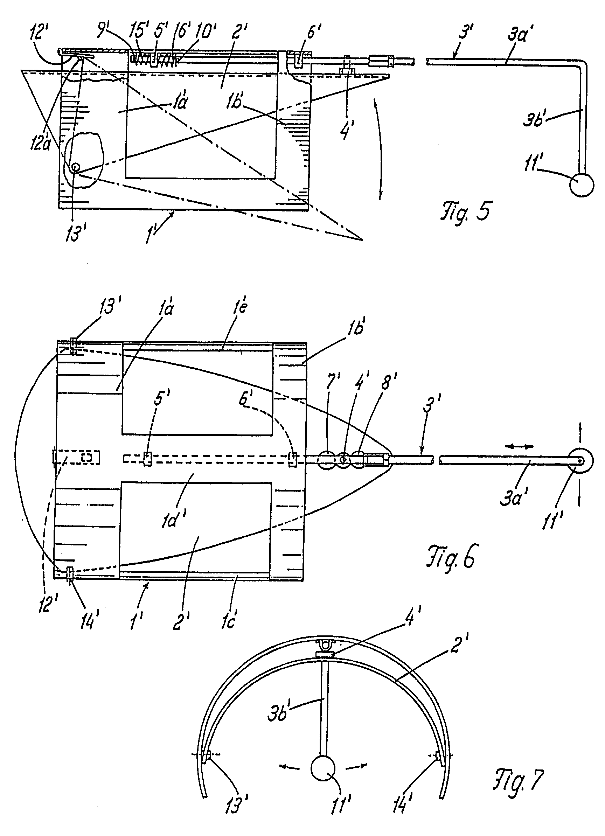

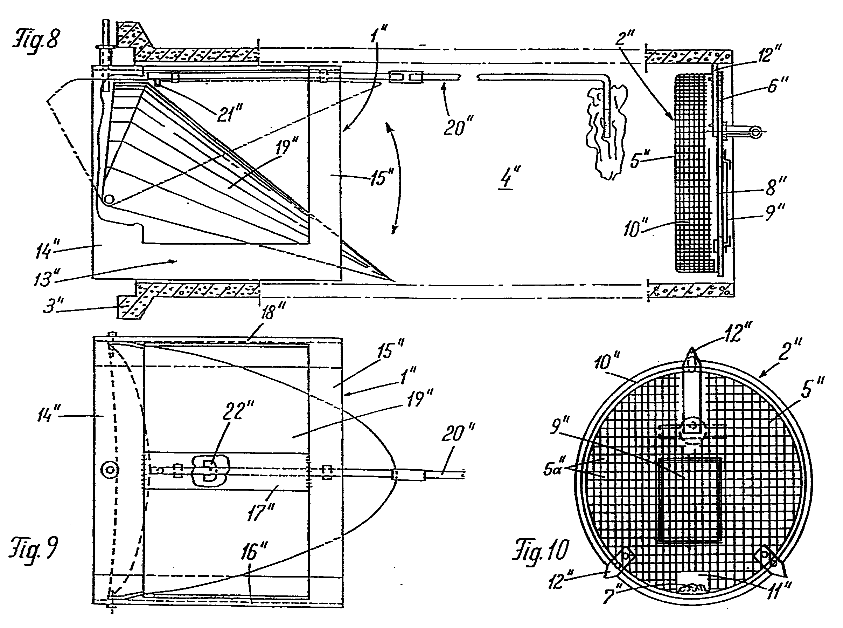

Die in den Figuren 5 bis 7 als bevorzugtes Ausführungsbeispiel dargestellte Lebendfalle besteht im wesentlichen aus einem Fallenkörper 1', einem als Halbkegel ausgebildeten, schwenkbar gelagerten Veschlußelement 2' und einem im oberen Bereich des Fallenkörpers 1' drehbar und längsverschieblich gelagerten Auslösegestänge 3'. Die Außenkontur des Fallenkörpers 1' ist auf die Innenkontur des Durchlasses abgestimmt, so daß die Lebendfalle schließend in den Durchlaß einführbar ist. An dem Auslösegestänge 3' ist ein Dauermagnet 4' befestigt, der der Schwenkachse des Verschlußelementes 2' gegenüberliegt und in der der in den Figuren 5 und 6 in vollen Linien dargestellten Offenstellung das Verschlußelement in dieser Lage hält. Das Auslösegestänge 3' besteht aus einer horizontalen Stange 3a' und einem Auslösehebel 3b', der im dargestellten Ausführungsbeispiel durch Abwinkeln der Stange 3a' gebildet ist. Die Stange 3a' ist in zwei mit Abstand zueinander angeordneten Lagerhülsen 5', 6' gelagert, die am Fallenkörper 1' fest angeordnet sind. Der Dauermagnet 4' ist an der horizontalen Stange 3a' angeordnet. Im Bereich der Spitze des Verschlußelementes sind zwei kreisförmige Durchbrechungen 7', 8' eingearbeitet, die in der Offenstellung des Verschlußelementes 2' in Längsrichtung vor und hinter dem Dauermagneten 4' liegen. In die Stange 3a' des Auslösegestänges 3' sind an der dem Dauermagneten 4' abgewandten Seite zwei Querstifte 9', 10' im Abstand und beidseitig der Lagerhülse 5' eingeschlagen. An diese Querstifte 9', 10' stützen sich die abgewandten Enden von zwei Positionierfedern 15', 16' ab, deren einander zugewandte Enden sich an der Lagerhülse 5' abstützen. Da die Federcharakteristiken gleich sind, wird das Auslösegestänge 3' in eine solche Stellung gebracht, daß der Dauermagnet 4' zwischen den kreisförmigen Durchbrechungen 7', 8' liegt. Auf das freie Ende des Auslösehebels 3b' ist eine Kugel 11' aufgesetzt, damit er sich selbsttätig in die vertikale Lage einpendelt. Am oberen Bereich ist am Fallenkörper 1' an der Eingangsseite, das heißt, an der dem Dauermagneten abgewandten Seite, eine Sicherungsklinke 12' drehbar gelagert. Die Drehachse steht achsparallel zu der Schwenkachse des Verschlußelementes 2', welches auf zwei innenseitig am Fallenkörper 1' fest angesetzten Bolzen 13', 14' schwenkbar gelagert ist. Das freie Ende der Sicherungsklinke 12' liegt in der Offenstellung des Verschlußelementes 2' auf diesem auf. In der Schließstellung des Verschlußelementes 2' hintergreift ein Vorsprung 12a' den Rand des Verschlußelementes, so daß dieses erst nach Anheben der Sicherungsklinke 12' angehoben werden kann. Der Fallenkörper 1' besteht aus zwei der Innenkontur eines Durchlasses angepaßten Endringen 1a', 1b', die im Abstand zueinander stehen. Die Endringe 1a' und 1b' sind durch drei Längsstege 1c', 1d' und 1e' miteinander so verbunden, daß die unteren Längsstege 1c' und 1e' die untere Begrenzung bilden, und der mittlere Längssteg 1d' die obere Begrenzung bildet. An dem oberen Längssteg 1d sind die Lagerhülsen 5', 6' befestigt. Aus den Figuren 5 bis 7 ergibt sich, daß das Verschlußelement 2' in die in der Figur 5 strichpunktiert dargestellte Schließlage fällt, sobald das Auslösegestänge 3' durch den Auslösehebel 3b' gedreht und/oder Auslösehebel 3b' gedreht und/oder in seiner Längsrichtung verschoben wird. Sofern das Verschlußelement aus einem nicht magnetisierbaren Material, z.B. Kunststoff besteht, kann in dem dem Dauermagneten 4' zugeordneten Bereich ein Formstück aus einem magnetisierbaren Material eingearbeitet oder festgelegt sein.

Die in den Figuren 8 - 10 dargestellte Lebendfangeinrichtung weist eine Lebendfalle 1'' und ein Sperrelement 2'' auf. Die Lebendfalle 1'' ist in einen Endbereich, das Sperrelement 2'' in den gegenüberliegenden Endbereich eines aus Betonrohren 3 begrenzten Durchlasses 4'' fest, jedoch herausnehmbar eingesetzt. Das Sperrelement 2'' ist dem Rohrquerschnitt nahezu angepaßt und weist eine Außenwandung 6'' und eine rarallel dazu verlaufende Innenwand 5'' auf. Die Innenwand weist eine Vielzahl von Durchbrechungen 5a'' auf, wie sie im dargestellten Ausführungsbeispiel aus einem engmaschigen Drahtgewebe gefertigt ist. In den Raum zwischen der Außen- und Innenwandung 6'', 5'' wird ein Köder 7'' eingelegt. Dazu ist die Außenwandung 6'' mit einer Öffnung 8'' versehen, die durch eine schwenkbare Klappe 9'' oder durch einen abnehmbaren Deckel verschlossen ist. Die die Innenwand 5'' mit der Außenwand 6'' verbindende Umfangswand 10'' besteht ebenfalls aus einem engmaschigen Drahtgewebe. In Abweichung von der dargestellten Ausführung kann sie auch aus einem Blechring ausgebildet sein. In der Innenwandung 5'' ist im unteren Bereich eine Schlußöffnung 11'' mit einem relativ geringen Querschnitt für Kleintiere vorgesehen. Das Sperrelement ist mit drei über den Umfang verteilten Verriegelungselementen 12'' ausgerüstet, von denen das oberste über einen Exenter verschiebbar ist, um das Sperrelement in den Durchlaß einzuklemmen. Die Verriegelungselemente sind Flachstahlabschnitte mit einer Spitze. Damit auch Licht in den Durchlaß einfällt und der Köder 7'' für den Jäger von außen sichtbar ist, kann die Außenwandung aus einem lichtdurchlässigen, transparenten Material gefertigt sein, z.B. aus Plexiglas.
Die Lebendfalle 1'' besteht aus einem Fallenkörper 13'', der zwei im Abstand zueinander stehende Endringe 14'', 15'' und mehrere die Endringe 14'', 15'' verbindende Stäbe 16'', 17'' und 18'' umfasst. An der Eingangsseite des Fallenkörpers 13'' ist ein Verschlußelement 19'' in Form eines Halbkegels schwenkbar gelagert. Die Offenstellung ist in strichpunktieren, die Schließstellung in Vollinien gezeichnet. Innenseitig ist am Fallenkörper 13'' im oberen Bereich ein winkelförmiges Auslösegestänge 20'' drehbar gelagert. Das Auslösegestänge 20'' ist mit einem Nocken 21'' versehen, der in der hochgestellten Offenstellung des Verschlußelementes 19'' in eine Durchbrechung des Halbkegels des Verschlußelementes 19'' eingreift. Sobald das Auslösegestänge 20'' verdreht wird, gerät der Nocken 21'' aus der Durchbrechung 22'', so daß das Verschlußelement herunterfällt und die Öffnung des Durchlasses 4'' verschließt.

## Patentansprüche

1. Lebendfalle für Raubtiere, Füchse, Marder, wildernde Katzen oder dergleichen, die in einen Endbereich eines Durchlasses einführbar ist, die mit wenigstens einem schwenkbaren Verschlußelement versehen ist, welches mittels eines in den Durchlaß hineinragenden Auslösegestänges selbsttätig von der Offen- in die Schließstellung schwenkbar ist und im anderen Endbereich des Durchlasses ein festsetzbares Sperrelement aufweist,
**dadurch gekennzeichnet**,
daß das Verschlußelement nach Art eines Halbkegels (2) ausgebildet ist, der an der der Spitze (2a) gegenüberliegenden Öffnung des Durchlasses (19) zugewandten Seite im Bereich der die Mantelfläche begrenzenden Längskanten (2b, 2c) schwenkbar gelagert ist.

2. Lebendfalle nach Anspruch 1,
**dadurch gekennzeichnet**,
daß der Halbkegel (2) an definierter Stelle im Bereich des Krümmungsmittelpunktes eine U-förmige Durchbrechung (16) derart aufweist, daß an der der Spitze (2a) abgewandten Seite eine Zunge (17) gebildet wird, die sich in der Fängigen Stellung der Lebendfalle an einem an dem Auslösegestänge angeordneten Nocken (14) abstützt.

3. Lebendfalle nach Anspruch 1,
**dadurch gekennzeichnet**,
daß das Auslösegestänge (3) aus einer den Nocken (14) tragenden horizontalen Stange (3a), die am Fallenkörper 1 im oberen Bereich drehbar lagert, jedoch gegen axiale Verschiebung gesichert ist, und aus einem im Winkel dazu stehenden Auslösehebel (3b) gebildet ist, der im Abstand zum Fällenkörper (1) steht.

4. Lebendfalle nach Anspruch 1,
**dadurch gekennzeichnet**,
daß an der Spitze (2a) des Halbkegels (2) gegenüberliegenden Seite im oberen Bereich des Fallenkörpers (1) ein in vertikaler Richtung verfahrbarer Sperrbolzen (20) in einer Führungsbuchse (15) derart gelagert ist, daß dieser in der Schließstellung des Halbkegels (2a) den Rand hintergreift.

5. Lebendfalle nach Anspruch 4,
**dadurch gekennzeichnet**,
daß der Halbkegel (2) an der der Spitze (2a) gegenüberliegenden Seite mit einem abgewinkelten Kragen (2d) versehen ist.

6. Lebendfalle nach einem oder mehreren der vorhergehenden Ansprüche,
**dadurch gekennzeichnet**,
daß das Fallengehäuse (1) auf zwei im Abstand zueinander stehenden Endbögen (4, 5) und mindestens drei die Endbögen (4,5) verbindenden Längsstegen (6-8) besteht, wobei ein oberer Längssteg (7) die Krümmungsmittelpunkte der Endbögen (4 und 5) verbindet.

7. Lebendfalle nach Anspruch 6,
**dadurch gekennzeichnet**,
daß die beiden Längsstege (6, 8) die untere Begrenzung des Halbkegels (2) bilden.

8. Lebendfalle nach einem oder mehreren der vorhergehenden Ansprüche,
**dadurch gekennzeichnet**,
daß das Auslösegestänge (3) aus einer horizontalen Stange (3a) einen im Abstand zur Spitze (2a) des Halbkegels (2) stehenden Auslösehebels (3b) gebildet ist, und daß das horizontale Rohr (3a) in zwei Lagerhülsen (12 und 13) drehbar gelagert ist, die im oberen Bereich des Fallenkörpers (1) liegen.

9. Lebendfalle nach einem oder mehreren der vorhergehenden Ansprüche,
**dadurch gekennzeichnet**,
daß die horizontale Stange (3a) aus mindestens zwei durch jeweils eine Kupplungshülse (22) verbundenen Teilstücken besteht.

10. Lebendfalle nach einem oder mehreren der vorhergehenden Ansprüche,
**dadurch gekennzeichnet**,
daß das Auslösegestänge (3) einen Auslösehebel (3b) aufweist, der durch Abwinkelung eines Endbereiches der horizontalen Stange gebildet ist.

11. Lebendfalle nach einem oder mehreren der vorhergehenden Ansprüche,
**dadurch gekennzeichnet**,
daß der Halbkegel (2) aus einem Blechzuschnitt geformt ist.

12. Lebendfalle für Raubtiere nach Anspruch 1,
**dadurch gekennzeichnet**,
daß das Halteelement ein das Verschlußelement in der Offenstellung berührender Dauermagnet (4') ist.

13. Lebendfalle nach Anspruch 1 und 12,
**dadurch gekennzeichnet**,
daß der Dauermagnet (4') das Verschlußelement (2') an der der Schwenkachse gegenüberliegenden Seite berührt.

14. Lebendfalle nach Anspruch 1 und 12,
**dadurch gekennzeichnet**,
daß das Verschlußelement (2') mit mindestens einer Durchbrechung (7', 8') mit einer gegenüber dem Dauermagneten (4') größeren Außenkontur versehen ist, die in Längsrichtung, bezogen auf die Offenstellung des Verschlußelementes (2') neben dem Dauermagneten (4') liegt.

15. Lebendfalle nach den Ansprüchen 1, 12 bis 14,
**dadurch gekennzeichnet**,
daß in dem Verschlußelement (2') zwei Durchbrechungen (7', 8') vorgesehen sind, die vor und hinter dem Dauermagneten (4') liegen.

16. Lebendfalle nach Anspruch 14 und/oder Anspruch 15,
**dadurch gekennzeichnet**,
daß das Auslösegestänge (3') durch wenigstens eine Positionierfeder (15', 16') derart ausrichtbar ist, daß in der Offenstellung des Verschlußelementes der Dauermagnet neben oder zwischen der Durchbrechung bzw. den Durchbrechungen steht.

17. Lebendfalle nach Anspruch 1 und 16,
**dadurch gekennzeichnet**,
daß das Auslösegestänge (3') durch zwei beidseitig einer am Fallenkörper (1') befestigten Lagerhülse (5') angeordneten Positionierfedern (15', 16') ausrichtbar ist, deren einander abgewandten Enden sich an Querstiften (9', 10') der horizontalen Stange des Auslösegestänges (3') abstützt.

18. Lebendfalle nach Anspruch 1 und 12,
**dadurch gekennzeichnet**,
daß der Fallenkörper an dem der Schwenkachse des Verschlußelementes (2') zugeordneten Seite mit einer schwenkbaren, den Rand des Verschlußelementes (2') in der Schließstellung hintergreifenden Sicherungsklinke (12') ausgerüstet ist.

19. Lebendfalle nach Anspruch 1 und 18,
**dadurch gekennzeichnet**,
daß die Sicherungsklinke (12') einen den Rand des Verschlußelementes (2') hintergreifenden Vorsprung (12a') aufweist.

20. Lebendfalle nach einem oder mehreren der vorhergehenden Ansprüche 1, 12 bis 19,
**dadurch gekennzeichnet**,
daß der Auslösehebel (3b') des Auslösegestänges (3') an seinem abgewinkelten, freien Ende mit einem Pendelgewicht in Form einer Kugel (11') versehen ist.

21. Lebendfalle nach den Ansprüchen 1 bis 20,
**dadurch gekennzeichnet**,
daß das Sperrelement (2'') topfartig ausgebildet ist und daß zumindest die der Lebendfalle (1'') zugewandte Innenwandung mit einer Vielzahl von Durchbrechungen versehen ist.

22. Lebendfalle nach den Ansprüchen 1 bis 21,
**dadurch gekennzeichnet**,
daß die der Lebendfalle (1'') abgewandte Außenwandung (6'') des Sperrelementes (2'') plattenförmig ausgebildet und mit Verriegelungselementen (12'') ausgerüstet ist.

23. Lebendfalle nach den Ansprüchen 1 bis 22,
**dadurch gekennzeichnet**,
daß in der der Lebendfalle (1'') abgewandten Außenwandung (6'') eine durch eine Klappe (9'') oder einen Deckel verschließbare Öffnung (8'') zum Einlegen und/oder zur Kontrolle eines Köders (7'') vorgesehen ist.

24. Lebendfalle nach Anspruch 21,
**dadurch gekennzeichnet**,
daß im unteren Bereich der Innenwandung (5'') eine Schlupföffnung (11'') von relativ geringer Größe für Kleintiere angeordnet ist.

25. Lebendfalle nach einem oder mehreren der Ansprüche 21 bis 24,
**dadurch gekennzeichnet**,
daß zumindest die Innenwandung (5'') des Sperrelementes (2'') aus einem Drahtgewebe oder einem Lochblech gefertigt ist.

26. Lebendfalle nach einem oder mehreren der Ansprüche 21 bis 25,
**dadurch gekennzeichnet**,
daß auch die die Innenwandung (5'') mit der Außenwandung (6'') verbindende Umfangswand (10'') mit einer Vielzahl von Durchbrechungen versehen ist.

27. Lebendfalle nach einem oder mehreren der Ansprüche 21 bis 26,
**dadurch gekennzeichnet**,
daß die Außenwandung (6'') aus einem durchsichtigen Material gefertigt ist.
